# EUROPÄISCHE PATENTSCHRIFT

(11) **EP 3 555 732 B1**
(45) Veröffentlichungstag und Bekanntmachung des Hinweises auf die Patenterteilung: **23.10.2024**
(21) Anmeldenummer: 17807828.3
(22) Anmeldetag: 28.11.2017
(51) Int. Cl.: B60K 35/10, B60K 35/29, G06F 3/041, G06F 3/044

(54) **SENSOREINRICHTUNG FÜR EIN FAHRZEUG UND VERFAHREN ZUM BETRIEB EINER SOLCHEN SENSOREINRICHTUNG**
SENSOR DEVICE FOR A VEHICLE AND METHOD FOR OPERATING SUCH A SENSOR DEVICE
DISPOSITIF DE DÉTECTION POUR UN VÉHICULE ET PROCÉDÉ POUR FAIRE FONCTIONNER UN TEL DISPOSITIF DE DÉTECTION

(30) Priorität: 16.12.2016 DE 102016124592
(43) Veröffentlichungstag der Anmeldung: 23.10.2019
(73) Patentinhaber: Valeo Schalter und Sensoren GmbH, 74321 Bietigheim-Bissingen (DE)
(72) Erfinder: STAUDE, Sascha, 74321 Bietigheim-Bissingen (DE); MUELLER, Stefan, 74321 Bietigheim-Bissingen (DE); TANDJEU TCHUISSI, Landry, 74321 Bietigheim-Bissingen (DE); MACK, Raphael, 74321 Bietigheim-Bissingen (DE)
(74) Vertreter: Pothmann, Karsten
(86) Internationale Anmeldenummer: PCT/EP2017/080659
(87) Internationale Veröffentlichungsnummer: WO 2018/108516

(56) Entgegenhaltungen:
- DE-A1- 102013 112 651
- US-A1- 2015 261 377
- US-A1- 2016 132 281

## Beschreibung

Die Erfindung betrifft eine Sensoreinrichtung für ein Fahrzeug, insbesondere eine Bedieneinrichtung zur Steuerung sicherheitsrelevanter Funktionen, zur kapazitiven Erkennung einer Anwesenheit eines Eingabemittels im Bereich einer Detektionsfläche einer Sensoroberfläche mit einer ersten elektrisch leitfähigen Sensorelektrode, die im Bereich der Detektionsfläche angeordnet ist, und mit einer Auswerteeinheit, welche über eine erste Anschlussleitung elektrisch mit einem zugehörigen Anschluss der ersten Sensorelektrode verbunden ist. Die Auswerteeinheit ist dazu ausgelegt, am Anschluss der ersten Sensorelektrode die Kapazität gegenüber der Systemmasse zu messen.

Des Weiteren betrifft die Erfindung ein Verfahren zum Betrieb einer vorbeschriebenen Sensoreinrichtung.

Sensoreinrichtungen zur berührungsempfindlichen Erkennung eines Eingabemittels im Bereich einer Detektionsfläche für sicherheitsrelevante Anwendungen sind aus der Schrift DE 102011011769 A1 der Firma Fresenius Medical Care bekannt.

Dieses Dokument offenbart eine Möglichkeit, die Eingabe an einem berührungsempfindlichen Bildschirm, oder auch Touchscreen, besonders zuverlässig zu erkennen, wodurch eine sicherheitsrelevante Anwendung in Medizingeräten ermöglicht wird. Durch die Verwendung von redundanten Sensorelementen wird gewährleistet, dass Eingaben mehrfach erkannt werden können. Durch diese Maßnahme sollen Eingaben besonders sicher erkannt und Fehler vermieden werden.

Die US 2016/132281 A1 offenbart ein Anzeigegerät, das zur Vergrößerung geeignet ist. Das Anzeigesystem umfasst ein erstes Anzeigefeld, ein zweites Anzeigefeld, ein Erkennungsmittel und ein Kompensationsmittel. Das erste Anzeigefeld enthält einen ersten Anzeigebereich. Das zweite Anzeigefeld enthält einen zweiten Anzeigebereich. Der erste Anzeigebereich und der zweite Anzeigebereich umfassen einen ersten Bereich, in dem sie sich überlappen. Das Erkennungsmittel hat die Funktion, die Größe der ersten Region zu erkennen. Das Kompensationsmittel hat die Funktion, ein auf dem ersten Anzeigebereich angezeigtes Bild entsprechend der Änderung der Größe des ersten Bereichs zu kompensieren.

Die US 2015/261377 A1 offenbart ein Verarbeitungssystem bestehend aus einem Sensormodul und einem Bestimmungsmodul. Das Sensormodul besteht aus Sensorschaltungen, die mit Sensorelektroden eines Sensorelektrodenmusters gekoppelt sind. Das Sensormodul ist konfiguriert, ein moduliertes Signal auf eine erste Sensorelektrode des Sensorelektrodenmusters zu treiben und erste resultierende Signale, von der ersten Sensorelektrode zu empfangen sowie zweite resultierende Signale von einer zweiten Sensorelektrode des Sensorelektrodenmusters zu empfangen. Das Ermittlungsmodul ist konfiguriert, um eine Änderung der kapazitiven Kopplung zwischen einem Eingangsobjekt und der ersten Sensorelektrode basierend auf den ersten resultierenden Signalen und einer Änderung der kapazitiven Kopplung zwischen der ersten und zweiten Sensorelektrode basierend auf den zweiten resultierenden Signalen zu bestimmen.

Die DE 10 2013 112 651 A1 offenbart einen Mehrschichtkörper zur Bereitstellung einer transparenten Tastaturfunktionalität. Die diskreten Tasten der erfindungsgemäßen transparenten Tastatur werden durch nicht berührungssensitive Bereiche auf der Schichtelektrode des Mehrschichtkörpers voneinander abgegrenzt.

Des Weiteren ist aus dem Stand der Technik die Erkennung einer entsprechenden Eingabe bzw. der Anwesenheit eines entsprechenden Eingabemittels nach dem kapazitiven Prinzip bekannt.

Die nichtvorveröffentlichte Patentanmeldung DE 102015112444.0 der Anmelderin beschreibt die Verwendung von kapazitiven Sensorelektroden in Kombination mit einer entsprechenden Auswerteschaltung, um die Anwesenheit eines Eingabemittels zu erkennen. Bei Annäherung eines Eingabemittels an die kapazitive Sensorelektrode oder bei entsprechender Berührung, wird das elektrische Feld zwischen der Sensorelektrode und dem Bezugspotential bzw. der Masse verändert. Dadurch ändert sich die Kapazität der Sensorelektrode, welche von der Auswerteschaltung detektiert werden kann. Zusätzlich kann die Kapazitätsänderung bei Anwesenheit eines Eingabemittels auch über die Sensorelektrode gegenüber einer zweiten Sensor- oder Referenzelektrode erkannt werden.

Insbesondere bei Bedieneinrichtungen in Fahrzeugen mit großer Sicherheitsrelevanz, wie z.B. für das Ein- und Ausschalten von Fahrassistenzfunktionen wie das (teil-)automatisierte Fahren oder aber auch die Erkennung der Hände des Fahrers am Lenkrad, besteht die Problematik darin, die Eingaben des Fahrers eindeutig und sicher erkennen zu können sowie die Funktionsfähigkeit der Bedieneinrichtung überprüfen zu können.

Daher ist es Aufgabe der Erfindung eine besonders genaue und zuverlässige Sensoreinrichtung für ein Fahrzeug, insbesondere eine Bedieneinrichtung zur Steuerung sicherheitsrelevanter Funktionen, zur kapazitiven Erkennung einer Anwesenheit eines Eingabemittels im Bereich einer Detektionsfläche einer Sensoroberfläche sowie ein zugehöriges Verfahren zur Eingabe- und Fehlererkennung bereitzustellen.

Diese Aufgabe wird durch eine erfindungsgemäße Sensoreinrichtung sowie durch ein erfindungsgemäßes Verfahren gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Sensoreinrichtung ist dadurch gekennzeichnet, dass die Auswerteeinrichtung zusätzlich über eine zweite Anschlussleitung mit einem zweiten zugehörigen Anschluss der ersten Sensorelektrode elektrisch verbunden ist, wobei erster und zweiter Anschluss an einander gegenüberliegenden Endbereichen der ersten Sensorelektrode angeordnet sind.

Durch eine derartige Anordnung der Auswerteeinheit und die zusätzlichen Anschlüsse der Sensorelektrode ist es möglich, zusätzliche Auswerte- und Fehlermessungen durchzuführen, was insbesondere bei Bruch der Sensorelektroden oder bei der Bildung von Übergangswiderständen von Vorteil ist. Außerdem kann die Anwesenheit eines Eingabemittels im Bereich der Detektionsflächen, auf mehrfache und dadurch auf genauere Weise erkannt werden.

In einer bevorzugten Ausgestaltung der erfindungsgemäßen Sensoreinrichtung weist die Sensoreinrichtung eine zweite elektrisch leitfähige Sensorelektrode mit einem ersten zugehörigen Anschluss im Bereich der Detektionsfläche auf. Die Auswerteeinheit ist über eine dritte Anschlussleitung mit dem ersten Anschluss der zweiten Sensorelektrode verbunden. Durch diese Maßnahme kann eine zweite Kapazitätsmessung gegenüber der Systemmasse vorgenommen werden, um ein Eingabemittel zu detektieren. Des Weiteren wäre es auch möglich eine Kapazitätsmessung zwischen erster und zweiter Sensorelektrode durchzuführen. Insbesondere kann hier die zweite Sensorelektrode als sogenannte Stimulationselektrode fungieren, indem an dem ersten Anschluss der zweiten Sensorelektrode von der Auswerteeinheit ein Stimulationssignal bereitgestellt wird, damit an der ersten Sensorelektrode die Auswerteeinheit die Kapazitätsmessung durch Detektion des übergekoppelten Signals durchführen kann, beispielsweise nach dem später genannten CVD-Verfahren.

Des Weiteren kann die zweite Sensorelektrode der erfindungsgemäßen Sensoreinrichtung gemäß einer weiteren vorteilhaften Ausgestaltung über einen zweiten Anschluss verfügen, wobei erster und zweiter Anschluss der zweiten Sensorelektrode jeweils an einander gegenüberliegenden Endbereichen der Sensorelektrode angeordnet sind. Die Auswerteeinheit der Sensoreinrichtung ist dabei über eine vierte Anschlussleitung mit dem zweiten Anschluss der zweiten Sensorelektrode verbunden, so dass auch hierüber Kapazitäts- und Kontrollmessungen durchgeführt werden können.

Die Auswerteeinheit der erfindungsgemäßen Sensoreinrichtung ist dazu ausgelegt, eine Durchgangsprüfung zwischen den ersten und zweiten Anschlüssen der ersten und/oder zweiten Sensorelektrode durchzuführen. Dies kann insbesondere durch Anlegen eines ersten Spannungspegels am ersten oder zweiten Anschluss einer Sensorelektrode und anschließendem Messen eines zweiten Spannungspegels am jeweils anderen Anschluss der jeweiligen Sensorelektrode erfolgen. Bei einer Sensorelektrode ohne Bruch der Leiterbahn oder der Sensorfläche würde die Auswerteeinheit im Wesentlichen denselben Spannungspegel an einem Anschluss messen, welcher zuvor am anderen Anschluss angelegt wurde. Bei Abweichungen zwischen den Werten der Spannungspegel kann auf einen Fehler an der Sensorelektrode geschlossen werden, wobei hier Differenzen von z.B. mehr als 0,2 V auf einen Fehler hindeuten würden.

Alternativ wäre es auch möglich, dass die Auswerteeinheit den Spannungsabfall zwischen den ersten und zweiten Anschlüssen an jeweils einer Sensorelektrode misst. Im fehlerfreien Fall muss dieser Spannungsabfall im Wesentlichen 0 V sein, da die Sensorelektroden in der Regel gut elektrisch leitfähig sind. Sobald hier ein Spannungsabfall gemessen wird, der größer als ein definierter Grenz- oder auch Referenzwert ist, kann von einem Fehler an der Sensorelektrode ausgegangen werden. Spannungsabfälle zwischen den Anschlüssen einer Sensorelektrode von insbesondere mehr als 0,2 V oder auch 0,5 V wären zum Beispiel ein Indikator dafür, dass an der Sensorelektrode ein Defekt vorliegt.

In einer weiteren vorteilhaften Ausgestaltung der erfindungsgemäßen Sensoreinrichtung bestimmt die Auswerteeinheit, aufgrund des gemessenen Spannungsabfalls zwischen den Anschlüssen einer Sensorelektrode und dem dabei fließenden Strom, den ohmschen Widerstand der jeweiligen Sensorelektrode zwischen den jeweiligen Anschlüssen. Dies hat den Vorteil, dass aufgrund des exakt bestimmten Widerstands der Zustand der Sensorelektrode wesentlich genauer bestimmt werden kann. Insbesondere für den Fall, dass für die Sensorelektroden ein Material mit einem bestimmten ohmschen Widerstand verwendet wird, ist diese Messung besonders sinnvoll. Dadurch kann der gemessene Wert mit einem Soll-Widerstandswert, oder auch Referenzwert, verglichen und bei Abweichungen auf einen Fehler geschlossen werden.

Zur Fehlerdetektion können die vorgenannten Messungen einzeln aber auch in verschiedener Kombination miteinander und in verschiedener Reihenfolge durchgeführt werden.

Grundsätzlich ist es so, dass mit den vorgenannten oder den noch folgenden Vorrichtungen bzw. Verfahren, nicht nur die Funktionalität der Sensorelektrode, sondern auch die Funktionalität der Auswerteinheit an sich überprüft werden kann, insbesondere wenn Kalibrierwerte oder sogar Driftmodelle der relevanten Parameter bekannt sind. Die gemessenen Werte können mit den Kalibrier- bzw. Referenzwerten verglichen und so auf einen Fehler geschlossen werden. Die Auswertung kann von der zu überwachenden Auswerteeinheit, oder aber auch von einer zweiten Auswerteinheit, vorgenommen werden, um eine zuverlässige Fehlerdetektion zu gewährleisten.

In einer bevorzugten Ausgestaltung der erfindungsgemäßen Sensoreinrichtung ist die Auswerteinheit dazu ausgelegt, jeweils die Kapazität am ersten und am zweiten Anschluss der ersten und/oder zweiten Sensorelektrode gegenüber der Masse bzw. dem Bezugspotential zu messen. Dadurch können zwei Kapazitätsmessungen unabhängig voneinander durchgeführt und miteinander verglichen werden. Bei funktionsfähiger Sensoreinrichtung müssen die Ergebnisse der ersten und zweiten Messung im Wesentlichen identisch sein, wobei diese Messungen auch parallel durchgeführt werden können. Es wird also ein diversitärer Messwert bereitgestellt, welcher zur Plausibilisierung der gesamten Messeinrichtung herangezogen werden kann. Sobald beispielsweise eine Sensorelektrodenfläche oder -leiterbahn bricht, resultiert das in unterschiedlichen Kapazitätswerten je nach gewähltem Anschluss der entsprechenden Sensorelektrode.

Darüber hinaus kann es von Vorteil sein, dass die Auswerteeinheit gemäß einer weiteren Ausgestaltung der erfindungsgemäßen Sensoreinrichtung dazu ausgelegt ist, die ersten und zweiten Anschlüsse der jeweiligen ersten und/oder zweiten Sensorelektrode zusammenzuschalten und die Kapazität der ersten und/oder zweiten Sensorelektrode gegenüber der Masse bzw. dem Bezugspotential über die jeweiligen zusammengeschalteten Anschlüsse zu messen. Dadurch ist es möglich auch bei einem Bruch der Sensorelektrodenfläche oder -leiterbahn, zuverlässig eine Kapazitätsmessung durchzuführen, ohne dass die Funktion der Sensoreinrichtung eingeschränkt wird, da die effektive Sensorelektrodenfläche fast identisch bleibt und eine Änderung der Kapazität durch Anwesenheit eines Eingabemittels stets erkannt werden kann.

In einer bevorzugten Ausgestaltung der erfindungsgemäßen Sensoreinrichtung schaltet die Auswerteeinheit die ersten und zweiten Anschlüsse der ersten und zweiten Sensorelektrode zusammen und misst die Kapazität zwischen der ersten und zweiten Sensorelektrode über die jeweiligen zusammengeschalteten Anschlüsse. Zum einen ist hier grundsätzlich eine zweite kontinuierliche Kapazitätsmessung zwischen den Sensorelektroden, neben der ersten kontinuierlichen Kapazitätsmessung der ersten Sensorelektrode gegenüber der Masse, möglich, wodurch eine genauere Bestimmung der Kapazitätsänderung bei Anwesenheit eines Eingabemittels möglich ist, da hier wiederrum zwei Messwerte zur Detektion eines Eingabemittels vorliegen.

Zum anderen kann auch hier, wie in der vorherigen Ausgestaltung, im Fehlerfall, z.B. bei Bruch der Sensorelektrodenfläche, die Kapazitätsmessung zur Erkennung der Anwesenheit eines Eingabemittels nach wie vor durchgeführt werden, da auch hier die effektive Sensorelektrodenfläche durch zusammenschalten der Sensorelektroden-anschlüsse unverändert bleibt und dadurch eine Änderung der Kapazität bei Anwesenheit eines Eingabemittels detektiert werden kann.

Bei allen vorgenannten Konfigurationen ist es grundsätzlich möglich, neben der ersten kontinuierlichen Kapazitätsmessung der ersten Sensorelektrode gegenüber der Masse, gemäß einer vorteilhaften Ausgestaltung der erfindungsgemäßen Sensoreinrichtung mit Hilfe einer zweiten Sensorelektrode, eine zweite kontinuierliche Kapazitätsmessung zwischen erster und zweiter Sensorelektrode bereitzustellen, um die Anwesenheit eines Eingabemittels im Bereich der Detektionsfläche über die Kapazitätsänderung zu erkennen. Durch die zwei Messungen wird die Genauigkeit der Erfassung der Kapazitätsänderung bei Anwesenheit eines Eingabemittels erhöht. Hier kann in dieser Konfiguration insbesondere auch das Capacitive-Voltage-Divider Verfahren (CVD-Verfahren) der Firma Microchip verwendet werden, um die Kapazität zu bestimmen. Zur näheren Information zu diesem Verfahren sei auf den Anwendungshinweis der AN2098 der Firma Microchip verwiesen, zu finden im Internet unter: http://ww1.microchip.com/downloads/en/AppNotes/00002098A.pdf.

Alternativ kann die Kapazitätsmessung bzw. die Detektion der Kapazitätsänderung beispielsweise über die Verstimmung der Kapazität eines Schwingkreises oder aber auch über die Vermessung der Ladekurven von Strom oder Spannung der jeweiligen Kapazitäten.

Hinsichtlich des Messverfahrens zur Kapazitätsmessung besteht insofern keine Beschränkung.

In einer weiteren Ausgestaltung der erfindungsgemäßen Sensoreinrichtung ist die Auswerteeinheit dazu ausgelegt, den ersten und zweiten Anschluss einer ersten oder zweiten Sensorelektrode zusammenzuschalten und eine Kapazitätsmessung zwischen den zusammengeschalteten Anschlüssen der ersten oder zweiten Sensorelektrode und den ersten oder zweiten Anschlüssen der jeweils anderen Sensorelektrode durchzuführen. Diese weitere Variante liefert mehrere Hintergrundkapazitätswerte, also ohne Anwesenheit eines Eingabemittels, die zur Fehler- oder Betätigungserkennung herangezogen werden können, indem diese statischen Kapazitätswerte mit bekannten Referenzwerten verglichen werden. Bei einer Abweichung von den Referenzwerten kann auf einen Fehler geschlossen werden.

Grundsätzlich ist es von Vorteil, dass zur Fehlererkennung oder zur Erhöhung der Bediengenauigkeit, mindestens zwei unterschiedliche Messungen durchgeführt werden, um diese Messwerte miteinander oder mit einem Referenzwert zu vergleichen. Die mindestens zwei unterschiedlichen Messungen können dabei jeweils Kapazitätsmessungen in unterschiedlicher Anschlusskonfiguration umfassen. Es ist aber auch möglich eine oder mehrere Kapazitätsmessungen mit den übrigen Messungen zur Durchgangsprüfung, Widerstandsmessung oder Spannungsabfallmessung mit der entsprechenden Anschlusskonfiguration Konfigurationen zu kombinieren.

Insbesondere die Möglichkeit die Kapazitätsmessung und die Durchgangsprüfung, Widerstandsmessung oder Spannungsabfallmessungen parallel durchzuführen, stellt eine besonders bevorzugte Ausgestaltung der erfindungsgemäßen Sensoreinrichtung dar. Hierzu können die von der Auswerteinheit zur Kapazitätsmessung bereitgestellten Spannungen, Signale oder Signalverläufe auch für die Durchgangsprüfung, Widerstandsmessung oder Spannungsabfallmessungen genutzt werden.

In einer weiteren vorteilhaften Ausgestaltung der erfindungsgemäßen Sensoreinrichtung sind die Sensorelektroden als metallische Strukturen auf einer Leiterplatte ausgeführt. Das hat den Vorteil, dass diese Sensorelektroden in stabilen und zuverlässigen Fertigungsprozessen kostengünstig hergestellt werden können. Die Strukturen können hierbei plattenförmig oder auch als Leiterbahn ausgeführt sein. Sofern die Sensorelektroden als Leiterbahnen ausgeführt sind, wäre es auch von Vorteil diese mäanderförmig und ineinander kämmend auszuführen sofern erste und zweite Sensorelektroden vorhanden sind. Die mäanderförmige Struktur der Leiterbahn hat aber auch bei einer einzelnen Sensorelektrode Vorteile, da diese eine optimale Flächenausnutzung bietet. Bei plattenförmigen Sensorelektroden wären auch verschachtelte Strukturen denkbar. Darüber hinaus können auch für die erste und die zweite Sensorelektrode unterschiedliche Lagen auf der Leiterplatte genutzt werden, wie z.B. zum einen die Vorder- und zum anderen die Rückseite der Leiterplatte.

Die erfindungsgemäße Sensoreinrichtung ist dazu geeignet auch ein Verfahren zur Erhöhung der Messgenauigkeit bzw. der Erkennungsgenauigkeit von Eingabemitteln im Bereich der Detektionsfläche und zur Fehlererkennung bereitzustellen. In einer vorteilhaften Ausgestaltung der erfindungsgemäßen Sensoreinrichtung verwendet die Auswerteeinheit mindestens zwei unterschiedliche Kapazitätsmesswerte aus unterschiedlichen Anschlusskonfigurationen, um die Wahrscheinlichkeit der Detektion eines Eingabemittels im Bereich der Detektionsfläche zu erhöhen. Je nach Eingabemittel und Art und Weise der Eingabe können unterschiedliche Anschlusskonfigurationen vorteilhaft sein.

Unabhängig von der Anschlusskonfiguration wird in einer vorteilhaften Ausgestaltung der erfindungsgemäßen Sensoreinrichtung das sogenannte Capacitive-Voltage-Divider-Verfahren verwendet, welches zur Ermittlung der Kapazität zwei Sensorelektroden verwendet. Hier wird die Kapazität aus dem Verhältnis der Spannung der internen Kapazität eines Sample-And-Hold-Glieds eines Analog-Digital-Wandlers (AD-Wandler) in der Auswerteeinheit und der Spannung an der Kapazität der ersten Sensorelektrode gegen Masse und/oder der Spannung zwischen den beiden Sensorelektroden ermittelt. Damit Kapazitätsänderungen erfasst werden können, werden die Kapazitätsmessungen kontinuierlich durchgeführt und der zeitliche Verlauf der Kapazität ermittelt.

Dieses Verfahren lässt sich besonders vorteilhaft Parallelisieren, in dem beispielsweise die Auswerteeinheit über zwei unabhängige AD-Wandler verfügt, die jeweils an einen ersten bzw. zweiten Anschluss der ersten Sensorelektrode angeschlossen werden. So kann zum einen die interne Kapazität durch Parallelschalten vergrößert und damit die Messgenauigkeit verbessert werden. Zum anderen können aber auch die Drifts der beiden AD-Wandler gegeneinander überwacht werden und so auf einen weiteren Fehler geschlossen werden.

Wenn im Zusammenhang mit den hier beschriebenen Messverfahren von paralleler Messung gesprochen wird, so umfasst das die zeitgleiche Messung mit separaten AD-Wandlern bzw. mit entsprechenden Messbaugruppen, aber auch die sequentielle Messwertaufnahme mit einer deutlich schnelleren Abtastung der Messwerte im Bezug auf die Messwertänderungen durch nur einen AD-Wandler bzw. durch die entsprechende Messbaugruppe unter Verwendung eines Multiplexers bzw. Demultiplexers.

In einer weiteren vorteilhaften Ausgestaltung der erfindungsgemäßen Sensoreinrichtung meldet die Auswerteeinheit Fehler, welche über vorgenannte Vorrichtungen und Verfahren ermittelt wurden, an eine zentrale oder dezentrale elektronische Steuereinheit. Die Steuereinheit wertet die Fehler aus und führt entsprechende Maßnahmen durch, um z.B. die Sicherheit im Fahrzeug zu gewährleisten. So ist z.B. denkbar, dass sobald ein Fehler detektiert wird, gewisse mittels der Sensoreinrichtung bedienbare oder verbundene Funktionen nicht mehr angeboten werden, wie z.B. Fahrassistenzsysteme wie das (teil-)autonome Fahren des Fahrzeuges, entsprechende Meldungen an den Fahrer ausgegeben werden und/oder gewisse aktive Funktionen definiert beendet werden.

Manche der genannten Merkmale bzw. Eigenschaften betreffen sowohl eine erfindungsgemäße Sensoreinrichtung als auch ein erfindungsgemäßes Verfahren. Einige dieser Merkmale werden teilweise nur einmal beschrieben, gelten jedoch unabhängig voneinander im Rahmen technisch möglicher Ausgestaltungen sowohl für eine erfindungsgemäße Sensoreinrichtung als auch für ein erfindungsgemäßes Verfahren. Die mit Bezug auf die Sensoreinrichtung vorgestellten, bevorzugten Ausführungsformen und deren Vorteile gelten somit entsprechend auch für ein erfindungsgemäßes Verfahren und umgekehrt.

Die Erfindung wird nachfolgend anhand bevorzugter Ausführungsbeispiele näher erläutert, unter Bezugnahme auf die beigefügten Zeichnungen.

Es zeigen:
- Fig. 1: in schematischer Darstellung ein Armaturenbrett eines Fahrzeugs mit Lenkrad mit Bedieneinrichtungen für sicherheitsrelevante Funktionen,
- Fig. 2: in schematischer Darstellung die Bedieneinrichtungen mit Detektionsflächen und Eingabemitteln,
- Fig. 3a: in schematischer Darstellung eine erfindungsgemäße Sensoreinrichtung mit Auswerteeinheit und einer über zwei Anschlüsse verbundenen ersten Sensorelektrode,
- Fig. 3b: in schematischer Darstellung eine erfindungsgemäße Sensoreinrichtung mit Auswerteeinheit und einer über zwei Anschlüssen verbundenen ersten sowie einer über einen Anschluss verbundenen Sensorelektrode,
- Fig. 3c: in schematischer Darstellung eine erfindungsgemäße Sensoreinrichtung mit Auswerteeinheit und zwei über jeweils zwei Anschlüsse verbundene Sensorelektroden,
- Fig. 4: schematisch ein mögliches Ausführungsbeispiel zweier Sensorelektroden der erfindungsgemäßen Sensoreinrichtung in Serie geschaltet,
- Fig. 5: schematisch ein weiteres Ausführungsbeispiel einer Sensorelektrode auf einer Leiterplatte und zwar auf unterschiedlichen Lagen der Leiterplatte angeordnet.
- Fig. 6: eine Tabelle der möglichen Anschlusskonfigurationen zur Durchführung der verschiedenen Messungen

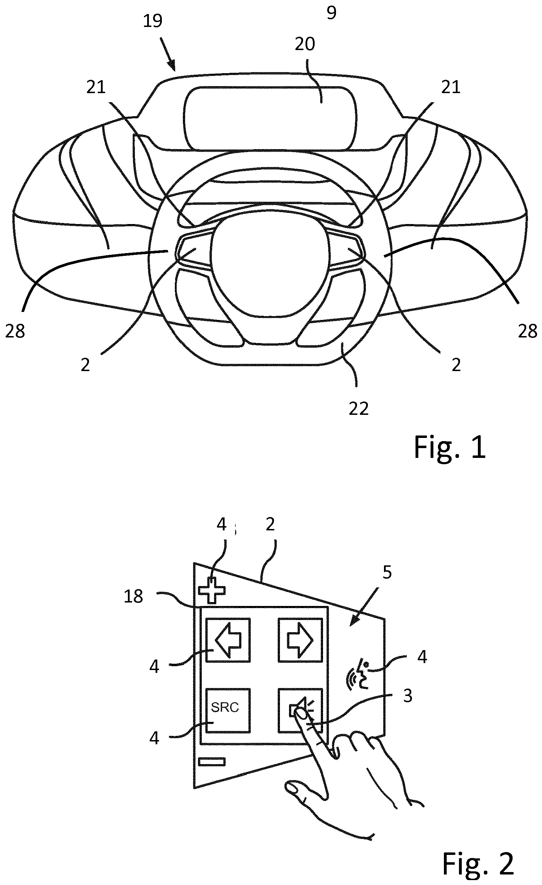

Fig. 1 zeigt ein Armaturenbrett 19 eines Kraftfahrzeuges mit einem Lenkrad 22. In diesem Ausführungsbeispiel findet die erfindungsgemäße Sensoreinrichtung 1 in Form der Bedieneinrichtung 2 als Lenkradschalter bzw. Lenkradbedieneinrichtung Anwendung. Das bedeutet, dass die Sensorelektroden 6, 7 und Auswerteeinheit 8 (nicht in Fig. 1 dargestellt) der Sensoreinrichtung 1 in das Lenkrad 22 integriert sind, z.B. im Bereich der Bedieneinrichtung 2.

Diese Anordnung erlaubt es dem Fahrer, z.B. während der Fahrt, Bedieneingaben am Lenkrad über die Bedieneinrichtung 2 am Lenkrad 22 zu tätigen. Die Bedieneinrichtung 2 ist dabei im Bereich der Lenkradspeichen 21 angeordnet, so dass als Eingabemittel 3 die Finger oder der Daumen der Fahrerhand verwendet werden können. Die Bedieneingaben können die Steuerung von Fahrassistenzsystemen, wie z.B. das (teil-)autonome Fahren, von Multimediaanwendungen, von Kommunikationsanwendungen oder aber auch fürjedwede andere Anwendungen im Fahrzeug umfassen. Eine Beschränkung auf die verwendete Funktion besteht insofern nicht.

Entsprechende Eingaben bzw. deren Aktionen können auf der Instrumententafel 20 des Fahrzeuges wiedergegeben werden. Üblicherweise werden hierfür Displays verwendet, die aber auch an anderer Stelle im Fahrzeug verbaut sein können.

In einem weiteren Ausführungsbeispiel gemäß Fig.1 ist die erfindungsgemäße Sensoreinrichtung 1 in Form der Bedieneinrichtung 28 ausgestaltet, welche direkt am Lenkrad 22, und zwar in einem Bereich des Lenkradkranzes an dem sich die Hände des Fahrers zur Führung des Fahrzeuges befinden, positioniert ist. Die Position der Bedieneinrichtung 28 umfasst beispielsweise die Elf- und Zweiuhr-Position am Lenkrad sowie die angrenzenden Bereiche. Diese Handposition des Fahrers ist ideal für eine Fahrt entlang einer Straße mit langgezogenen Kurven, wie z.B. entlang der Autobahn oder auf Landstraßen. Alternativ kann die Bedieneinrichtung 28 sich aber auch über den gesamten Umfang des Lenkrades 22 erstrecken, so dass an jeder Position des Lenkradkranzes eine Hand des Fahrers detektiert werden kann.

Durch diese Anordnung ist es möglich, die Anwesenheit eines Eingabemittels 3, in diesem Ausführungsbeispiel die Hände des Fahrers, am Lenkrad 22 zu detektieren. So kann beispielsweise in sicherheitsrelevanten Anwendungen, wie z.B. dem (teil-)autonomen Fahren, detektiert werden, ob der Fahrer seine Hände am Lenkrad hat oder nicht. Entsprechend des detektierten Zustandes kann dann die jeweilige Anwendung an- oder abgeschaltet und entsprechende Meldungen auf der Instrumententafel 20 ausgegeben werden.

Fig. 2 zeigt ein Ausführungsbeispiel der Bedieneinrichtung 2 aus Fig. 1. Die Bedieneinrichtung 2 umfasst mehrere Detektionsflächen 4 auf der Sensoroberfläche 5. Im Bereich der Detektionsflächen 4 können Eingabemittel 3, wie hier der Finger des Fahrers oder einer anderen Person innerhalb des Fahrzeuges, selektiv erkannt werden, um entsprechende Bedieneingaben zu erkennen. Zur Verdeutlichung der jeweiligen Funktionen sind die Detektionsflächen mit entsprechenden Symbolen versehen und können aus Gründen der Übersichtlichkeit zu Gruppen 18 von Detektionsflächen 4 zusammengefasst sein.

Die Funktionen umfassen beispielsweise Fahrassistenzsysteme wie Tempomat, aktive Abstandsregelung, autonomes Fahren sowie Kommunikations- und Multimediasysteme. Eine Einschränkung auf bestimmte Funktionen, welche über die Bedieneinrichtung 2 gesteuert werden können besteht insofern nicht.

Die Bedieneinrichtung 2 gemäß Fig. 2 kann in einem alternativen Ausführungsbeispiel auch in einem Display des Fahrzeuges (nicht gesondert dargestellt) integriert sein, um ein berührungsempfindliches Display bereitzustellen. Entsprechend dieser Anwendung sind dann die Sensorelektroden 6, 7 und die Auswerteeinheit 8 der Sensoreinrichtung 1 in das Display integriert.

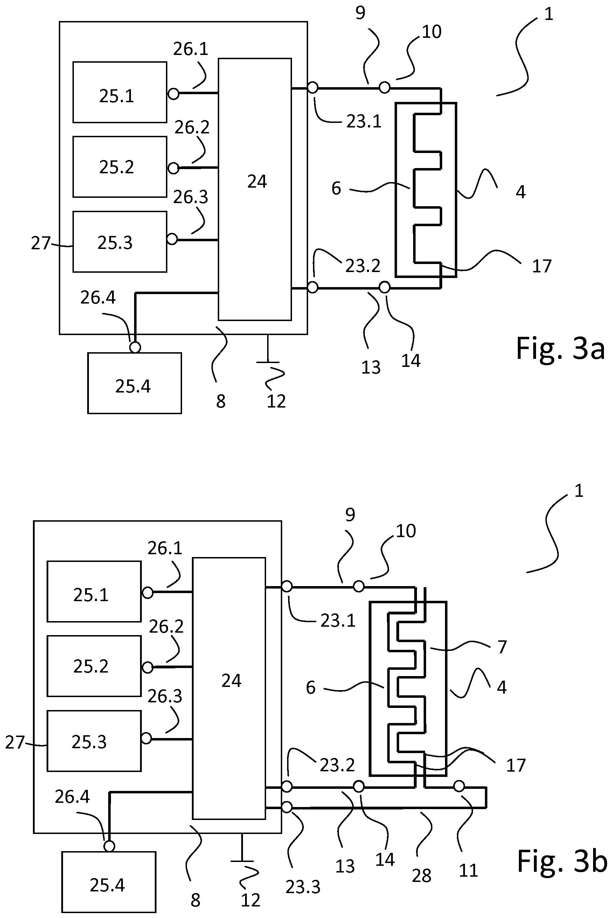

Fig.3a zeigt ein Ausführungsbeispiel der erfindungsgemäßen Sensoreinrichtung 1. Zur Sensoreinrichtung 1 gehört mindestens eine Detektionsfläche 4, die eine erste Sensorelektrode 6 aufweist. In diesem Beispiel ist die erste Sensorelektrode 6 als mäanderförmige Leiterbahn 17 ausgeführt. Die dazugehörige Leiterplatte ist nicht dargestellt. Durch die mäanderförmige Struktur wird der zur Verfügung stehende Platz im Bereich der Detektionsfläche 4 optimal ausgenutzt und so die Detektionswahrscheinlichkeit erhöht.

Die Sensorelektrode 6 verfügt über erste 10 und zweite Anschlüsse 14, wobei diese an einander gegenüberliegenden Endbereichen der Sensorelektrode 6 angeordnet sind. Insbesondere ist die Lage des Anschlusses 10 zum Anschluss 14 so gewählt, dass ein Fehler an der Sensorelektrode 6 möglichst zuverlässig detektiert werden kann. Das kann beispielsweise dadurch erreicht werden, dass der Abstand bzw. der Signalweg vom ersten 10 zum zweiten Anschluss 14 der Sensorelektrode 6 maximiert wird.

Der erste Anschluss 10 der ersten Sensorelektrode 6 ist über die Anschlussleitung 9 elektrisch mit dem Anschluss 23.1 der Auswerteeinheit 8 verbunden. Der zweite Anschluss 14 der ersten Sensorelektrode 6 ist über eine zweite Anschlussleitung 13 elektrisch mit dem Anschluss 23.2 der Auswerteeinheit 8 verbunden.

Um die verschiedenen Messungen der erfindungsgemäßen Sensoreinrichtung 1 auszuführen, verfügt die Auswerteeinheit 8 über eine Vielzahl von internen oder externen Funktionsbaugruppen 25.1 - 25.4 sowie über eine Schaltmatrix 24, die die Anschlüsse 10 oder 14 der Sensorelektrode 6 mit den Anschlüssen 26.1 - 26.4 der internen oder externen Funktionsbaugruppen 24 verbindet. Die Anschlüsse 26.1 - 26.4 der internen oder externen Funktionsbaugruppen 25.1 - 25.4 können dabei Signalausgänge oder Messeingänge sein.

In einem einfachen Anwendungsfall wird beispielsweise am Anschluss 26.1 von der internen Funktionsbaugruppe 25.1 ein erster Spannungspegel bereitgestellt, welcher über die Schaltmatrix 24 dem Anschluss 23.1 der Auswerteeinheit 8 zugeführt wird, so dass dieser erste Spannungspegel an dem ersten Anschluss 10 der ersten Sensorelektrode 6 anliegt. Zur Durchgangsprüfung der ersten Sensorelektrode 6, wird der an dem zweiten Anschluss 14 anliegende zweite Spannungspegel vom Anschluss 23.2 der Auswerteeinheit 8 über die Schaltmatrix 24 beispielsweise dem Anschluss 26.3 der internen oder externen Funktionsbaugruppe 25.3 zugeführt. Die interne oder externe Funktionseinheit 25.3 misst den zweiten Spannungspegel. Durch den Vergleich von erstem und zweitem Spannungspegel, z.B. durch die Auswerteeinheit 8, kann überprüft werden, ob die erste Sensorelektrode 6 funktionsfähig ist, insbesondere ob kein Bruch der Leiterbahn erfolgt ist. Im funktionsfähigen Zustand müsste der erste Spannungspegel dem zweiten Spannungspegel entsprechen.

Analog zur Durchgangsprüfung kann die interne Funktionsbaugruppe 25.1 neben dem Spannungspegel, welcher dem jeweiligen Anschluss 10 oder 14 der Sensorelektrode 6 über die Schaltmatrix 24 zugeführt wird, auch den dabei fließenden Strom durch die Sensorelektrode 6 ermitteln, um so den Widerstand der Sensorelektrode zu bestimmen.

Um die Anwesenheit eines Eingabemittels 3 (nicht in Fig. 3a dargestellt) mittels der Sensoreinrichtung 1 zu detektieren, kann die Kapazität der ersten Sensorelektrode 6 gegenüber der Masse 12 bestimmt werden. Diese Kapazität wird dabei kontinuierlich bestimmt, um Änderungen der Kapazität durch die Anwesenheit eines Eingabemittels detektieren zu können.

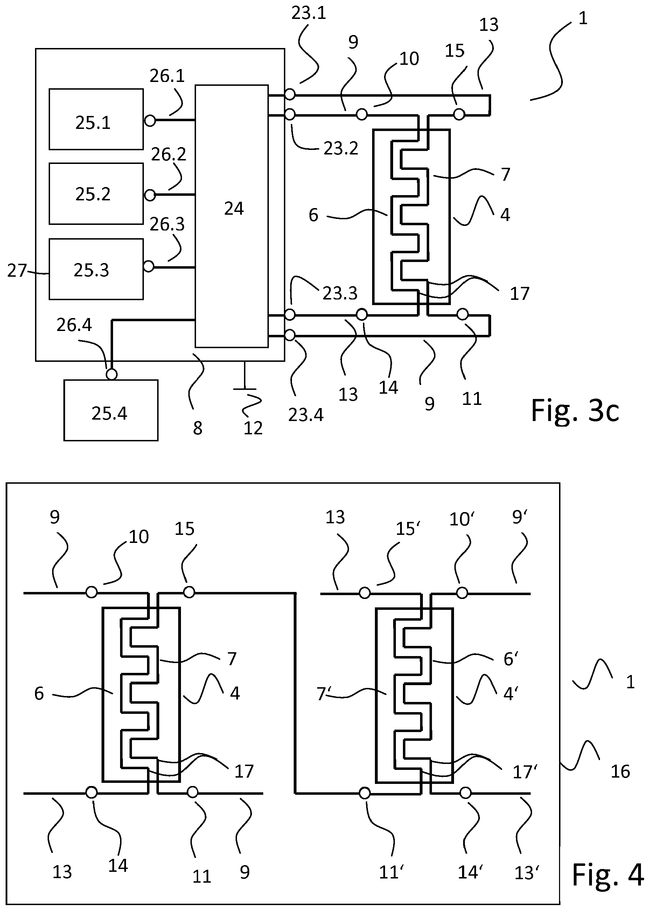

Die Kapazitätsmessung kann dabei über die Auswertung von Lade- und Entladekurven der jeweiligen Kapazität, die Auswertung einer Frequenzänderung nach dem Schwingkreisprinzip oder aber über auf das im Ausführungsbeispiel gemäß Fig. 3c verwiesene CVD-Verfahren erfolgen

Um die entsprechenden Funktionalitäten und Verfahren zu gewährleisten kann die Schaltmatrix oder aber auch die gesamte Auswerteeinheit kaskadiert ausgeführt sein, um mehrere parallele n:m-Verbindungen zu gewährleisten. Dadurch werden beispielsweise parallele Messungen ermöglicht.

Das vorgenannte Ausführungsbeispiel bezieht sich auf eine Konfiguration, die die maximale Auswahlmöglichkeit hinsichtlich Messverfahren und Anschlusskonfigurationen bietet. Eine Einschränkung der erfindungsgemäßen Sensoreinrichtung 1 hierauf besteht aber nicht. Genauso ist es auch möglich, dass nur eine begrenzte Auswahl von Messverfahren und Anschlusskonfigurationen für den Betrieb ausgewählt oder bereitgestellt wird. Die erfindungsgemäße Sensoreinrichtung 1 wird dann z.B. durch eine feste Verdrahtung einer oder mehrerer Anschlüsse 26.1 - 26.4 der jeweiligen internen oder externen Funktionsbaugruppen 25.1 - 25.4 mit den jeweiligen Anschlüssen 23.1 - 23.2 der Auswerteeinheit 8 oder direkt mit den jeweiligen Anschlüssen 10 oder 14 der Sensorelektrode 6 realisiert, so dass z.B. die Schaltmatrix 24 nur eine begrenzte Auswahl von Einzelschaltern benötigt oder gar ganz entfällt.

Wie die Sensoreinrichtung 1 gemäß des vorstehend beschriebenen Ausführungsbeispiels, um eine weitere Messmöglichkeit zur Erhöhung der Messgenauigkeit erweitert werden kann, zeigt die Fig. 3b. Hierfür wurde der Anordnung nach Fig. 3a eine weitere zweite Sensorelektrode 7 im Bereich der Detektionsfläche 4 hinzugefügt. In dem Beispiel nach Fig. 3b sind erste 6 und zweite Sensorelektrode 7 als mäanderförmige Leiterbahnen 17, die ineinander kämmen, ausgeführt. Die dazugehörige Leiterplatte ist nicht dargestellt. Die Leiterbahnen 17 sind unmittelbar benachbart, so dass die Anwesenheit eines Eingabemittels 3 (nicht dargestellt) im Bereich der Detektionsoberfläche 4 auf beide Sensorelektroden 6, 7 einwirkt.

Die zweite Sensorelektrode 7 weist einen ersten Anschluss 11 auf der über die Anschlussleitung 28 mit dem Anschluss 23.3 der Auswerteeinheit 8 verbunden ist.

Zur Erkennung der Anwesenheit eines Eingabemittels kann hier neben der Kapazität von der ersten Sensorelektrode 6 gegenüber der Masse 12 auch die Kapazität zwischen erster 6 und zweiter Sensorelektrode 7 kontinuierlich gemessen und bei Änderung der Kapazität auf die Anwesenheit eines Eingabemittels geschlossen werden. Dazu erzeugt beispielsweise die Funktionsbaugruppe 25.3 ein Stimulationssignal an dessen Ausgang 26.3, welches von der Schaltmatrix 24 dem Ausgang 23.3 der Auswerteeinheit 8 zugeführt und so an dem ersten Anschluss 11 der zweiten Sensorelektrode 7 bereitgestellt wird.

Dieses Stimulationssignal wird über die Kapazität zwischen erster 6 und zweiter Sensorelektrode 7 zur ersten Sensorelektrode 6 übergekoppelt und kann von der Auswerteeinheit 8 über eine der Funktionsbaugruppen 25.1, 25.2 oder 25.4 ausgewertet werden. Auch hier eignen sich wiederrum als Messverfahren zur kontinuierlichen Kapazitätsmessung die Auswertung von Lade- und Entladekurven der jeweiligen Kapazität, die Auswertung einer Frequenzänderung nach dem Schwingkreisprinzip oder aber das im Ausführungsbeispiel gemäß Fig. 3c angeführte CVD-Verfahren.

Fig.3c zeigt ein weiteres Ausführungsbeispiel der erfindungsgemäßen Sensoreinrichtung 1. Zur Sensoreinrichtung 1 gehört mindestens eine Detektionsfläche 4, die eine erste 6 und zweite Sensorelektrode 7 aufweist. In diesem Beispiel sind erste 6 und zweite Sensorelektrode 7 als mäanderförmige Leiterbahnen 17, die ineinander kämmen, ausgeführt. Die dazugehörige Leiterplatte ist nicht dargestellt. Die Leiterbahnen 17 sind unmittelbar benachbart, so dass die Anwesenheit eines Eingabemittels 3 (nicht dargestellt) im Bereich der Detektionsoberfläche 4 auf beide Sensorelektroden 6, 7 einwirkt.

Die Sensorelektroden 6 und 7 verfügen über erste 10, 11 und zweite Anschlüsse 14, 15, wobei diese jeweils an einander gegenüberliegenden Endbereichen der zugehörigen Sensorelektrode 6 bzw. 7 angeordnet sind. Insbesondere ist die Lage der Anschlüsse 10 bzw. 11 zu den Anschlüssen 14 bzw. 15 so gewählt, dass ein Fehler an der jeweiligen Sensorelektrode 6 bzw. 7 möglichst zuverlässig detektiert werden kann. Das kann beispielsweise dadurch erreicht werden, dass der Abstand bzw. der Signalweg vom ersten 10, 11 zum zweiten Anschluss 14, 15 der jeweiligen Sensorelektrode 6 bzw. 7 maximiert wird.

Die ersten Anschlüsse 10 und 11 der ersten 6 und zweiten Sensorelektrode 7 sind über zwei Anschlussleitungen (9, 13) elektrisch mit den Anschlüssen 23.2 bzw. 23.4 der Auswerteeinheit 8 verbunden. Die zweiten Anschlüsse 14 und 15 der ersten 6 und zweiten Sensorelektrode 7 sind über zwei weitere Anschlussleitungen (28, 29) elektrisch mit den Anschlüssen 23.3 bzw. 23.1 der Auswerteeinheit 8 verbunden.

Um die verschiedenen Messungen der erfindungsgemäßen Sensoreinrichtung 1 auszuführen, verfügt die Auswerteeinheit 8 über eine Vielzahl von internen oder externen Funktionsbaugruppen 25.1 - 25.4 sowie über eine Schaltmatrix 24, die die Anschlüsse 10, 11, 14 oder 15 der Sensorelektroden 6 bzw. 7 mit Anschlüssen 26.1 - 26.4 der internen oder externen Funktionsbaugruppen 24 verbindet. Die Anschlüsse 26.1 - 26.4 der internen oder externen Funktionsbaugruppen 25.1 - 25.4 können dabei Signalausgänge oder Messeingänge sein.

In einem einfachen Anwendungsfall wird beispielsweise am Anschluss 26.1 von der internen Funktionsbaugruppe 25.1 ein erster Spannungspegel bereitgestellt, welcher über die Schaltmatrix 24 dem Anschluss 23.2 der Auswerteeinheit 8 zugeführt wird, so dass dieser erste Spannungspegel an dem ersten Anschluss 10 der ersten Sensorelektrode 6 anliegt. Zur Durchgangsprüfung der ersten Sensorelektrode 6, wird der an dem zweiten Anschluss 14 anliegende zweite Spannungspegel vom Anschluss 23.3 der Auswerteeinheit 8 über die Schaltmatrix 24 beispielsweise dem Anschluss 26.3 der internen oder externen Funktionsbaugruppe 25.3 zugeführt. Die interne oder externe Funktionseinheit 25.3 misst den zweiten Spannungspegel. Durch den Vergleich von erstem und zweitem Spannungspegel, z.B. durch die Auswerteeinheit 8, kann überprüft werden, ob die erste Sensorelektrode 6 funktionsfähig ist, insbesondere ob kein Bruch der Leiterbahn erfolgt ist. Im funktionsfähigen Zustand müsste der erste Spannungspegel dem zweiten Spannungspegel entsprechen. Diese Durchgangsprüfung kann auch entsprechend an der zweiten Sensorelektrode 7 durchgeführt werden oder mit invertierter Anschlusskonfiguration.

Analog zur Durchgangsprüfung kann die interne Funktionsbaugruppe 25.1 neben dem Spannungspegel, welcher dem jeweiligen Anschluss 10, 11, 14 oder 15 jeweiligen Sensorelektrode 6 oder 7 über die Schaltmatrix 24 zugeführt wird, auch den dabei fließenden Strom durch die jeweilige Sensorelektrode 6 oder 7 ermitteln, um so den Widerstand der jeweiligen Sensorelektrode zu bestimmen.

Um die Anwesenheit eines Eingabemittels 3 (nicht in Fig. 3c dargestellt) mittels der Sensoreinrichtung 1 zu detektieren, kann das CVD-Verfahren verwendet werden. Mit diesem Verfahren kann die Kapazität der ersten Sensorelektrode 6 gegenüber der Masse 12 und die Kapazität zwischen der ersten Sensorelektrode 6 und der zweiten Sensorelektrode 7 bestimmt werden. Diese Kapazitäten werden dabei kontinuierlich bestimmt, um Änderungen der Kapazität durch die Anwesenheit eines Eingabemittels detektieren zu können. Für weitere Informationen zu diesem Verfahren sei hier auf die nicht vorveröffentlichte Schrift DE 102015112444.0 der Anmelderin verwiesen.

Zur Kapazitätsbestimmung gemäß dem CVD-Verfahren kann z.B. die interne oder externe Funktionsbaugruppen 25.2 ein StimulationssignalStimulationssignal für die erste 6 Sensorelektrode am Anschluss 26.2 bereitstellen. Die Schaltmatrix 24 führt dieses Signal dem ersten Anschluss 10 der ersten Sensorelektrode 6 über den Anschluss 23.2 der Auswerteeinheit 8 zu. Zur Messung der Kapazitätsänderung gemäß des CVD-Verfahrens verfügt die interne oder externe Funktionsbaugruppen 25.3 über ein Sample-and-hold-Glied. Die Schaltmatrix 24 verbindet den Anschluss 26.3 der internen oder externen Funktionsbaugruppe 25.3 mit dem Anschluss 23.4 der Auswerteeinheit 8, so dass das Sample-and-Hold-Glied Messwerte vom ersten Anschluss 11 der zweiten Sensorelektrode aufnehmen kann. In dieser Konfiguration kann so die Kapazität zwischen erster 6 und zweiter Sensorelektrode 7 gemessen werden.

Um die entsprechenden Funktionalitäten und Verfahren zu gewährleisten kann die Schaltmatrix auch kaskadiert ausgeführt sein, um mehrere parallele n:m-Verbindungen zu gewährleisten. Dadurch werden beispielsweise parallele Messungen ermöglicht.

Das vorgenannte Ausführungsbeispiel bezieht sich auf eine Konfiguration, die die maximale Auswahlmöglichkeit hinsichtlich Messverfahren und Anschlusskonfigurationen bietet. Eine Einschränkung der erfindungsgemäßen Sensoreinrichtung 1 hierauf besteht aber nicht. Genauso ist es auch möglich, dass nur eine begrenzte Auswahl von Messverfahren und Anschlusskonfigurationen für den Betrieb ausgewählt oder bereitgestellt wird. Die erfindungsgemäße Sensoreinrichtung 1 wird dann z.B. durch eine feste Verdrahtung einer oder mehrerer Anschlüsse 26.1 - 26.4 der jeweiligen internen oder externen Funktionsbaugruppen 25.1 - 25.4 mit den jeweiligen Anschlüssen 23.1 - 23.4 der Auswerteeinheit 8 oder direkt mit den jeweiligen Anschlüssen 10, 11, 14 oder 15 der entsprechenden Sensorelektroden 6 bzw. 7 realisiert, so dass z.B. die Schaltmatrix 24 oder nur eine begrenzte Auswahl von Einzelschaltern benötigt oder ganz entfällt.

Fig. 4 zeigt ein weiteres Ausführungsbeispiel der erfindungsgemäßen Sensoreinrichtung 1 ohne Darstellung der Auswerteeinheit 8. Hier werden zwei Detektionsflächen 4 und 4' mit den jeweils zwei Sensorelektroden 6, 6' und 7, 7' auf einer Leiterplatte 16 dargestellt.

Das besondere an diesem Ausführungsbeispiel ist, dass hier die zweiten Sensorelektroden 7 und 7' der benachbarten Detektionsflächen 4 und 4' über die jeweiligen ersten 11' und zweiten 15 Anschlüsse in Serie geschaltet sind. Die übrigen Anschlüsse 10, 10', 11, 1414' und 15' werden über die entsprechenden Anschlussleitungen 9, 9', 13, 13', 28 und 29 mit der Auswerteeinheit 8 verbunden. Mit dieser Konfiguration kann die Auswerteeinheit 8 beispielsweise das StimulationssignalStimulationssignal gemäß dem CVD-Verfahren an den ersten Anschluss 11 der zweiten Sensorelektrode 7 der ersten Detektionsfläche 4 anlegen. Dieses StimulationssignalStimualtionssignal wird dann über den zweiten Anschluss 15 der zweiten Sensorelektrode 7 der ersten Detektionsfläche 4 auch dem ersten Anschluss 11' der zweiten Sensorelektrode 7' der zweiten Detektionsfläche 4' zugeführt. Dadurch kann ein von der Auswerteeinheit 8 erzeugtes Stimulationssignal für mehrere Detektionsflächen verwendet werden, um die Kapazität zwischen jeweils erster 6, 6' und zweiter 7, 7' Sensorelektrode der jeweiligen ersten 4 oder zweiten 4' Detektionsfläche zu bestimmen.

Nichtsdestotrotz kann in diesem Ausführungsbeispiel eine Überprüfung der Sensorelektroden 6, 6', 7 oder 7' durch die Auswerteeinheit 8 durch geführt werden. So kann beispielsweise zwischen den ersten 10 und zweiten Anschlüssen 14 der ersten Sensorelektrode 6 der ersten Detektionsfläche 4 mittels der Auswerteeinheit 8 eine Durchgangsprüfung oder Widerstandsmessung durchgeführt werden, um die Funktionalität der Sensorelektrode 6 prüfen zu können. Entsprechend kann dieses Verfahren für die die erste Sensorelektrode 6' der zweiten Detektionsfläche 4' angewendet werden.

Des Weiteren kann diese Durchgangsprüfung oder Widerstandsmessung der in Serie geschalteten zweiten Sensorelektroden 7 und 7' der ersten 4 und zweiten Detektionsflächen 4' ebenfalls durch die Auswerteeinheit 8 über die Anschlüsse 11 und 15' erfolgen.

Alternativ könnten aber auch die ersten Sensorelektroden 6 und 6' oder erste und zweite Sensorelektroden 6, 6', 7 und 7' der benachbarten Detektionsfläch 4 und 4' in Serie geschaltet werden. Die beschriebenen Messverfahren können hier entsprechend zur Anwendung kommen.

Auch ist die erfindungsgemäße Sensoreinrichtung 1 gemäß diesem Ausführungsbeispiel nicht auf zwei Detektionsflächen eingeschränkt. Eine entsprechende Verschaltung von ersten oder zweiten Sensorelektroden von mehr als zwei Detektionsflächen wäre auch denkbar.

Durch diese Maßnahme wäre es zum Beispiel möglich, grundsätzlich die jeweiligen Sensorelektroden, die als Stimulationselektroden z.B. im CVD-Verfahren dienen zusammenzufassen, um Anschlussleitungen einzusparen.

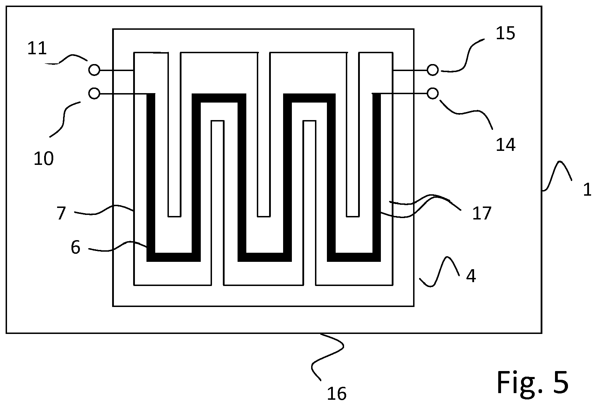

Fig. 5 zeigt ein weiteres Ausführungsbeispiel der erfindungsgemäßen Sensoreinrichtung 1 ohne Darstellung der Auswerteeinheit 8 und den Anschlussleitungen 9, 13, 28 und 29. Bei diesem Ausführungsbeispiel sind die Sensorelektroden 6 und 7 der Detektionsfläche 4 auf einer Leiterplatte 16 auf zwei unterschiedlichen Seiten angeordnet. Die erste Sensorelektrode 6 befindet sich dabei auf der Oberseite und die zweite Sensorelektrode 7 auf der Unterseite der Leiterplatte 16. Um eine optimale Kopplung zwischen erster 6 und zweiter 7 Sensorelektrode hierbei zu gewährleisten, wurde die Breite der Leiterbahn 17' der zweiten Sensorelektrode 7 vergrößert.

Denkbar wäre hier auch eine Anwendung des beschriebenen Ausführungsbeispiels in einer Multi-Layer-Leiterplatte.

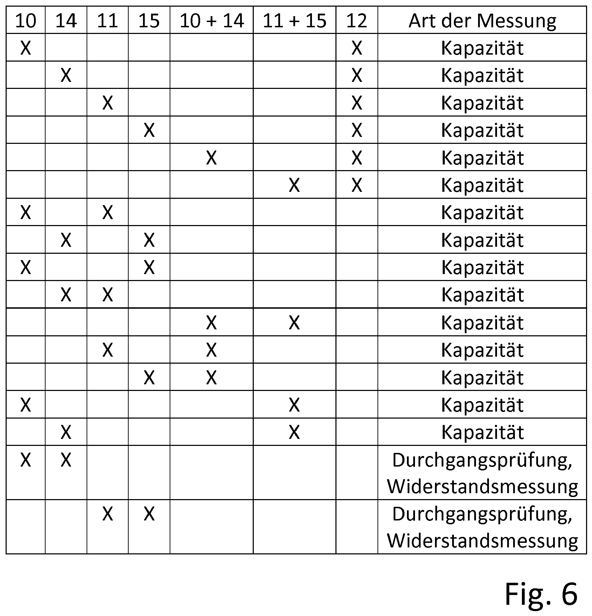

Fig. 6 zeigt eine Tabelle mit verschiedenen Messmöglichkeiten der gemäß Fig. 3c beschriebenen Sensorvorrichtung 1 bzw. der entsprechenden Messverfahren bei unterschiedlichen Konfigurationen der jeweiligen Anschlüsse 10, 11, 14 und 15, wobei diese Auflistung als nicht abschließend und nicht einschränkend zu verstehen ist. In der ersten Zeile der Tabelle sind zunächst die Bezugszeichen aus Fig. 3c der einzelnen, dann der zusammengeschalteten Anschlüsse, der Systemasse sowie abschließend eine Beschreibung der Messung aufgeführt. Darunter werden die unterschiedlichen Messmöglichkeiten aufgezeigt, indem Kreuze die betreffenden Messpunkte anzeigen. Sofern die Systemmasse 12 nicht ausgewählt ist, handelt es sich also um eine Messung, die zwischen den jeweiligen ausgewählten Anschlüssen bzw. den zusammengeschalteten Anschlüssen erfolgt.

Die hier aufgelisteten Messungen können auch parallel von der Sensorvorrichtung 1 ausgeführt werden, wobei das zum einen eine zeitgleiche Messung durch mindestens zwei der vier Funktionsbaugruppen 25.1 - 25.4 aus Fig. 3c sein kann. Zum anderen kann aber auch eine sequentielle Messwertaufnahme durch eine der vier Funktions-baugruppen 25.1 - 25.4 unter Zuhilfenahme der Schaltmatrix 24 erfolgen. Hierbei muss die Abtastung allerdings durch die ausgewählte Funktionsbaugruppe 25.1 - 25.4 deutlich schneller erfolgen als die Änderung der Messwerte.

## Patentansprüche

1. Sensoreinrichtung (1) für ein Fahrzeug, insbesondere eine Bedieneinrichtung (2) zur Steuerung sicherheitsrelevanter Funktionen, zur kapazitiven Erkennung einer Anwesenheit eines Eingabemittels (3) im Bereich einer Detektionsfläche (4) einer Sensoroberfläche (5) mit einer ersten elektrisch leitfähigen Sensorelektrode (6), die im Bereich der Detektionsfläche (4) angeordnet ist, und mit einer Auswerteeinheit (8), welche über eine erste Anschlussleitung (9) elektrisch mit einem zugehörigen Anschluss (10) der ersten Sensorelektrode (6) verbunden und dazu ausgelegt ist, am Anschluss (10) der ersten Sensorelektrode (6) die Kapazität gegenüber der Masse (12) zu messen,
**dadurch gekennzeichnet, dass**
die Auswerteeinrichtung (8) über eine zweite Anschlussleitung (13) mit einem zweiten zugehörigen Anschluss (14) der ersten Sensorelektrode (6) elektrisch verbunden ist, wobei erster (10) und zweiter Anschluss (14) an einander gegenüberliegenden Endbereichen der ersten Sensorelektrode (6) angeordnet sind und wobei die Auswerteeinheit (8) dazu ausgelegt ist, an der Sensoreinrichtung (1) eine Durchgangsprüfung zwischen erstem (10, 11) und zweitem Anschluss (14, 15) der Sensorelektrode (6, 7) durchzuführen.

2. Sensoreinrichtung (1) für ein Fahrzeug nach Anspruch 1,
**dadurch gekennzeichnet, dass**
im Bereich der Detektionsfläche (4) eine zweite elektrisch leitfähige Sensorelektrode (7) mit einem ersten zugehörigen Anschluss (11) angeordnet ist, welcher mit der Auswerteeinheit (8) über eine dritte Anschlussleitung (28) verbunden ist.

3. Sensoreinrichtung (1) für ein Fahrzeug nach Anspruch 2,
**dadurch gekennzeichnet, dass**
die zweite elektrisch leitfähige Sensorelektrode (7) über einen zweiten zugehörigen Anschluss (15) verfügt, der über eine vierte Anschlussleitung (29) mit der Auswerteeinheit (8) verbunden ist, wobei erster (11) und zweiter Anschluss (15) an einander gegenüberliegenden Endbereichen der zweiten Sensorelektrode (6) angeordnet sind.

4. Sensoreinrichtung (1) für ein Fahrzeug nach einem der Ansprüche 1 bis 3,
**dadurch gekennzeichnet, dass**
die Auswerteeinheit (8) dazu ausgelegt ist, zwischen erstem (10, 11) und zweitem Anschluss (14, 15) der Sensorelektrode (6, 7) einen Spannungsabfall zu messen.

5. Sensoreinrichtung (1) für ein Fahrzeug nach einem der Ansprüche 1 bis 3,
**dadurch gekennzeichnet, dass**
die Auswerteeinheit (8) dazu ausgelegt ist, an der Sensoreinrichtung (1) eine Widerstandsmessung zwischen erstem (10, 11) und zweitem Anschluss (14, 15) der Sensorelektrode durchzuführen.

6. Sensoreinrichtung (1) für ein Fahrzeug nach einem der Ansprüche 1 bis 5,
**dadurch gekennzeichnet, dass**
die Auswerteeinheit (8) dazu ausgelegt ist, durch Vergleich der Messwerte, mit mindestens einem Referenzwert, einen Fehler an der Sensoreinrichtung (1) zu detektieren.

7. Sensoreinrichtung (1) für ein Fahrzeug nach einem der vorangehenden Ansprüche, **dadurch gekennzeichnet, dass**
die Auswerteeinheit (8) dazu ausgelegt ist, die Kapazität gegenüber der Masse (12) am ersten (10, 11) und am zweiten Anschluss (14, 15) der ersten (6) und/oder zweiten Sensorelektrode (7) zu messen.

8. Sensoreinrichtung (1) für ein Fahrzeug nach einem der vorangehenden Ansprüche, **dadurch gekennzeichnet, dass**
die Auswerteeinheit (8) dazu ausgelegt ist, jeweils die ersten (10, 11) und zweiten (14, 15) Anschlüsse der ersten (6) und/oder zweiten Sensorelektrode (7) zusammenzuschalten und die Kapazität der ersten (6) und/oder zweiten Sensorelektrode (7) gegenüber der Masse (12) über die jeweiligen Anschlüsse zu messen.

9. Sensoreinrichtung (1) für ein Fahrzeug nach einem der Ansprüche 3 - 8,
**dadurch gekennzeichnet, dass**
die Auswerteeinheit (8) dazu ausgelegt ist, jeweils die ersten (10, 11) und zweiten Anschlüsse (14, 15) der ersten (6) und zweiten Sensorelektrode (7) zusammenzuschalten und die Kapazität zwischen der ersten (6) und zweiten Sensorelektrode (7) über die jeweiligen Anschlüsse zu messen.

10. Sensoreinrichtung (1) für ein Fahrzeug nach einem der Ansprüche 2 - 9,
**dadurch gekennzeichnet, dass**
die Auswerteeinheit (8) dazu ausgelegt ist, eine Kapazitätsmessung zwischen einem ersten (10) oder zweiten Anschluss (11) der ersten Sensorelektrode (6) und einem ersten (14) oder zweiten Anschluss (15) der zweiten Sensorelektrode (7) durchzuführen.

11. Sensoreinrichtung (1) für ein Fahrzeug nach einem der Ansprüche 2 - 10,
**dadurch gekennzeichnet, dass**
die Auswerteeinheit (8) dazu ausgelegt ist, den ersten (10, 11) und zweiten Anschluss (14, 15) einer ersten (6) oder zweiten Sensorelektrode (7) zusammenzuschalten und eine Kapazitätsmessung zwischen den zusammengeschalteten Anschlüssen der ersten (6) oder zweiten Sensorelektrode (7) und den ersten (10, 11) oder zweiten Anschlüssen (14, 15) der jeweils anderen Sensorelektrode durchzuführen.

12. Sensoreinrichtung (1) für ein Fahrzeug nach einem der Ansprüche 7 - 11,
**dadurch gekennzeichnet, dass**
die Auswerteeinheit (8) dazu ausgelegt ist, eine erste Kapazitätsmessung nach einem der vorgenannten Verfahren mit einer ersten Anschlusskonfiguration durchzuführen und anschließend mindestens eine zweite Kapazitätsmessung nach einem der vorgenannten Verfahren mit einer zweiten Anschlusskonfiguration durchzuführen, wobei die Auswerteinheit (8) ferner dazu ausgelegt ist, die Messwerte der ersten und mindestens zweiten Kapazitätsmessungen miteinander und/oder einem Sollwert zu vergleichen.

13. Sensoreinrichtung (1) für ein Fahrzeug nach einem der Ansprüche 7 - 12,
**dadurch gekennzeichnet, dass**
die Auswerteeinheit (8) dazu ausgelegt ist, die zur Kapazitätsmessung an den ersten (10, 11) und/oder zweiten Anschlüssen (14, 15) der ersten (6) und/oder zweiten Sensorelektrode (7) angelegten Signale bzw. Spannungspegel, zur Durchgangsprüfung und/oder zur Widerstandsmessung der ersten (6) und/oder zweiten Sensorelektrode (7) zu verwenden.

14. Sensoreinrichtung (1) für ein Fahrzeug nach einem der Ansprüche 6 - 13,
**dadurch gekennzeichnet, dass**
die Auswerteeinheit (8) dazu ausgelegt ist, die Kapazitätsmessung und/oder Durchgangsprüfung und/oder Widerstandsmessung parallel durchzuführen.

15. Sensoreinrichtung (1) für ein Fahrzeug nach einem der vorherigen Ansprüche, **dadurch gekennzeichnet, dass**
die ersten (6) und/oder zweiten Sensorelektroden (7) als metallische Struktur auf einer Leiterplatte (16) ausgeführt sind.

16. Sensoreinrichtung (1) für ein Fahrzeug nach einem der Ansprüche 2 - 15,
**dadurch gekennzeichnet, dass**
die ersten (6) und zweiten Sensorelektroden (7) als planare mäanderförmige Leiterbahnen (17) ausgeführt sind und die erste (6) und zweite Sensorelektrode (7) ineinander kämmend angeordnet sind.

17. Verfahren zur kapazitiven Erkennung einer Anwesenheit eines Eingabemittels (3) im Bereich einer Detektionsfläche (4) einer Sensoroberfläche (5) mit einer ersten elektrisch leitfähigen Sensorelektrode (6), wobei eine Auswerteeinheit (8) über eine erste Anschlussleitung (9) die Kapazität der ersten (6) Sensorelektrode gegenüber der Masse (12) am ersten Anschluss (10) misst,
**dadurch gekennzeichnet, dass**
die Auswerteeinrichtung (8) über eine zweite Anschlussleitung (13) mit einem zugehörigen zweiten Anschluss (14) der ersten Sensorelektrode (6) wenigstens eine Messungen zur Erhöhung der Messgenauigkeit und/oder der Fehlererkennung vornimmt und wobei die Auswerteeinheit (8) eine Durchgangsprüfung zwischen den ersten (10, 11) und zweiten Anschlüssen (14, 15) der jeweiligen Sensorelektrode durchführt.

18. Verfahren zur kapazitiven Erkennung einer Anwesenheit eines Eingabemittels (3) im Bereich einer Detektionsfläche (4) einer Sensoroberfläche (5) nach Anspruch 17, **dadurch gekennzeichnet, dass**
die Auswerteeinheit (8) Messungen an einer zweiten elektrisch leitfähigen Sensorelektrode (7) im Bereich einer Detektionsfläche (4) an einem ersten und/oder zweiten zugehörigen Anschluss (11, 15) über eine dritte bzw. vierte Anschlussleitung (28) durchführt.

19. Verfahren zur kapazitiven Erkennung einer Anwesenheit eines Eingabemittels (3) im Bereich einer Detektionsfläche (4) einer Sensoroberfläche (5) nach einem der Ansprüche 17 bis 18,
**dadurch gekennzeichnet, dass**
die Auswerteeinheit (8) einen Spannungsabfall an beiden Anschlüssen der jeweiligen Sensorelektrode (6, 7) misst.

20. Verfahren zur kapazitiven Erkennung einer Anwesenheit eines Eingabemittels (3) im Bereich einer Detektionsfläche (4) einer Sensoroberfläche (5) nach einem der Ansprüche 17 oder 18,
**dadurch gekennzeichnet, dass**
die Auswerteeinheit (8) eine Widerstandsmessung zwischen den ersten (10, 11) und zweiten Anschlüssen (14, 15) der jeweiligen Sensorelektrode (6, 7) durchführt.

21. Verfahren zur kapazitiven Erkennung einer Anwesenheit eines Eingabemittels (3) im Bereich einer Detektionsfläche (4) einer Sensoroberfläche (5) nach einem der Ansprüche 17 bis 20,
**dadurch gekennzeichnet, dass**
die Auswerteeinheit (8) jeweils die Kapazität gegenüber der Masse (12) an dem ersten (10, 11) und am zweiten Anschluss (14, 15) einer Sensorelektrode (6, 7) misst.

22. Verfahren zur kapazitiven Erkennung einer Anwesenheit eines Eingabemittels (3) im Bereich einer Detektionsfläche (4) einer Sensoroberfläche (5) nach einem der Ansprüche 17 bis 20,
**dadurch gekennzeichnet, dass**
die Auswerteeinheit (8) die ersten (10, 11) und zweiten Anschlüsse (14, 15) der jeweiligen ersten (6) und/oder zweiten Sensorelektrode (7) zusammenschaltet und die Kapazität der ersten (6) und/oder zweiten Sensorelektrode (7) gegenüber der Masse (12) über die jeweiligen Anschlüsse misst.

23. Verfahren zur kapazitiven Erkennung einer Anwesenheit eines Eingabemittels (3) im Bereich einer Detektionsfläche (4) einer Sensoroberfläche (5) nach einem der Ansprüche 18 bis 20,
**dadurch gekennzeichnet, dass**
die Auswerteeinheit (8) jeweils die ersten (10, 11) und zweiten Anschlüsse (14, 15) der ersten (6) und zweiten Sensorelektrode (7) zusammenschaltet und die Kapazität zwischen der ersten (6) und zweiten Sensorelektrode (7) über die jeweiligen Anschlüsse misst.

24. Verfahren zur kapazitiven Erkennung einer Anwesenheit eines Eingabemittels (3) im Bereich einer Detektionsfläche (4) einer Sensoroberfläche (5) nach einem der Ansprüche 18 bis 20,
**dadurch gekennzeichnet, dass**
die Auswerteeinheit (8) eine Kapazitätsmessung zwischen der ersten (6) und zweiten Sensorelektrode (7) über einen ersten (10) oder zweiten Anschluss (14) der ersten Sensorelektrode (6) und einen ersten (11) oder zweiten Anschluss (15) der zweiten Sensorelektrode (7) durchführt.

25. Verfahren zur kapazitiven Erkennung einer Anwesenheit eines Eingabemittels (3) im Bereich einer Detektionsfläche (4) einer Sensoroberfläche (5) nach einem der Ansprüche 18 bis 20,
**dadurch gekennzeichnet, dass**
die Auswerteeinheit (8) den ersten (10, 11) und zweiten Anschluss (14, 15) einer ersten (6) oder zweiten Sensorelektrode (7) zusammenschaltet und eine Kapazitätsmessung zwischen den zusammengeschalteten Anschlüssen der ersten (6) oder zweiten Sensorelektrode (7) und den ersten (10, 11) oder zweiten Anschlüssen (14, 15) der jeweils anderen Sensorelektrode (6, 7) durchführt.

26. Verfahren zur kapazitiven Erkennung einer Anwesenheit eines Eingabemittels (3) im Bereich einer Detektionsfläche (4) einer Sensoroberfläche (5) nach einem der Ansprüche 21 bis 25,
**dadurch gekennzeichnet, dass**
die Auswerteeinheit (8) eine erste Kapazitätsmessung nach einem der vorgenannten Verfahren mit einer ersten Anschlusskonfiguration durchführt und anschließend mindestens eine zweite Kapazitätsmessung nach einem der vorgenannten Verfahren mit einer zweiten Anschlusskonfiguration durchführt, wobei die Auswerteeinheit (8) die Messwerte der ersten und mindestens zweiten Kapazitätsmessungen miteinander und/oder einem Sollwert vergleicht.

27. Verfahren zur kapazitiven Erkennung einer Anwesenheit eines Eingabemittels (3) im Bereich einer Detektionsfläche (4) einer Sensoroberfläche (5) nach einem der Ansprüche 21 bis 26,
**dadurch gekennzeichnet, dass**
die Auswerteeinheit (8) zur Kapazitätsmessung an den ersten (10, 11) und/oder zweiten Anschlüssen (14, 15) der ersten (6) und/oder zweiten Sensorelektrode (7) Signale bzw. Spannungspegel anlegt und diese ebenfalls zur Durchgangsprüfung und/oder zur Widerstandsmessung der ersten (6) und/oder zweiten Sensorelektrode (7) verwendet.

28. Verfahren zur kapazitiven Erkennung einer Anwesenheit eines Eingabemittels (3) im Bereich einer Detektionsfläche (4) einer Sensoroberfläche (5) nach einem der Ansprüche 21 bis 27,
**dadurch gekennzeichnet, dass**
die Auswerteeinheit (8) die Kapazitätsmessung und/oder Durchgangsprüfung und/oder Widerstandsmessung parallel durchführt.

29. Verfahren zur kapazitiven Erkennung einer Anwesenheit eines Eingabemittels (3) im Bereich einer Detektionsfläche (4) einer Sensoroberfläche (5) nach einem der Ansprüche 21 bis 28,
**dadurch gekennzeichnet, dass**
die Auswerteeinheit (8) die Kapazitätsmessung nach dem Capacitive-Voltage-Divider-Verfahren durchführt.

## Claims

1. Sensor device (1) for a vehicle, in particular an operating device (2) for controlling safety-relevant functions, for capacitively detecting a presence of an input means (3) in the region of a detection area (4) of a sensor surface (5), having a first electrically conductive sensor electrode (6) arranged in the region of the detection area (4), and having an evaluation unit (8) which is electrically connected to an associated connection (10) of the first sensor electrode (6) via a first connection line (9) and is designed to measure the capacitance with respect to earth (12) at the connection (10) of the first sensor electrode (6),
**characterized in that**
the evaluation device (8) is electrically connected to a second associated connection (14) of the first sensor electrode (6) via a second connection line (13), wherein the first connection (10) and the second connection (14) are arranged in mutually opposite end regions of the first sensor electrode (6), and wherein the evaluation unit (8) is designed to carry out a continuity test between the first connection (10, 11) and the second connection (14, 15) of the sensor electrode (6, 7) at the sensor device (1).

2. Sensor device (1) for a vehicle according to Claim 1,
**characterized in that**
a second electrically conductive sensor electrode (7) having a first associated connection (11), which is connected to the evaluation unit (8) via a third connection line (28), is arranged in the region of the detection area (4).

3. Sensor device (1) for a vehicle according to Claim 2,
**characterized in that**
the second electrically conductive sensor electrode (7) has a second associated connection (15) which is connected to the evaluation unit (8) via a fourth connection line (29), wherein the first connection (11) and the second connection (15) are arranged in mutually opposite end regions of the second sensor electrode (6).

4. Sensor device (1) for a vehicle according to one of Claims 1 to 3,
**characterized in that**
the evaluation unit (8) is designed to measure a voltage drop between the first connection (10, 11) and the second connection (14, 15) of the sensor electrode (6, 7).

5. Sensor device (1) for a vehicle according to one of Claims 1 to 3,
**characterized in that**
the evaluation unit (8) is designed to carry out a resistance measurement on the sensor device (1) between the first connection (10, 11) and the second connection (14, 15) of the sensor electrode.

6. Sensor device (1) for a vehicle according to one of Claims 1 to 5,
**characterized in that**
the evaluation unit (8) is designed to detect a fault in the sensor device (1) by comparing the measured values with at least one reference value.

7. Sensor device (1) for a vehicle according to one of the preceding claims,
**characterized in that**
the evaluation unit (8) is designed to measure the capacitance with respect to earth (12) at the first connection (10, 11) and at the second connection (14, 15) of the first sensor electrode (6) and/or second sensor electrode (7) .

8. Sensor device (1) for a vehicle according to one of the preceding claims,
**characterized in that**
the evaluation unit (8) is designed to respectively interconnect the first connections (10, 11) and second connections (14, 15) of the first sensor electrode (6) and/or second sensor electrode (7) and to measure the capacitance of the first sensor electrode (6) and/or second sensor electrode (7) with respect to earth (12) via the respective connections.

9. Sensor device (1) for a vehicle according to one of Claims 3-8,
**characterized in that**
the evaluation unit (8) is designed to respectively interconnect the first connections (10, 11) and second connections (14, 15) of the first sensor electrode (6) and second sensor electrode (7) and to measure the capacitance between the first sensor electrode (6) and the second sensor electrode (7) via the respective connections.

10. Sensor device (1) for a vehicle according to one of Claims 2-9,
**characterized in that**
the evaluation unit (8) is designed to carry out a capacitance measurement between a first connection (10) or a second connection (11) of the first sensor electrode (6) and a first connection (14) or a second connection (15) of the second sensor electrode (7).

11. Sensor device (1) for a vehicle according to one of Claims 2-10,
**characterized in that**
the evaluation unit (8) is designed to interconnect the first connection (10, 11) and the second connection (14, 15) of a first sensor electrode (6) or a second sensor electrode (7) and to carry out a capacitance measurement between the interconnected connections of the first sensor electrode (6) or the second sensor electrode (7) and the first connections (10, 11) or second connections (14, 15) of the respective other sensor electrode.

12. Sensor device (1) for a vehicle according to one of Claims 7-11,
**characterized in that**
the evaluation unit (8) is designed to carry out a first capacitance measurement according to one of the above-mentioned methods using a first connection configuration and then to carry out at least a second capacitance measurement according to one of the above-mentioned methods using a second connection configuration, wherein the evaluation unit (8) is also designed to compare the measured values from the first and at least second capacitance measurements with one another and/or with a target value.

13. Sensor device (1) for a vehicle according to one of Claims 7-12,
**characterized in that**
the evaluation unit (8) is designed to use the signals or voltage levels applied to the first connections (10, 11) and/or second connections (14, 15) of the first sensor electrode (6) and/or second sensor electrode (7) for the purpose of the capacitance measurement to test the continuity and/or to measure the resistance of the first sensor electrode (6) and/or second sensor electrode (7) .

14. Sensor device (1) for a vehicle according to one of Claims 6-13,
**characterized in that**
the evaluation unit (8) is designed to carry out the capacitance measurement and/or continuity test and/or resistance measurement in a parallel manner.

15. Sensor device (1) for a vehicle according to one of the preceding claims,
**characterized in that**
the first sensor electrodes (6) and/or second sensor electrodes (7) are in the form of a metallic structure on a printed circuit board (16).

16. Sensor device (1) for a vehicle according to one of Claims 2-15,
**characterized in that**
the first sensor electrodes (6) and second sensor electrodes (7) are in the form of planar meandering conductor tracks (17) and the first sensor electrode (6) and the second sensor electrode (7) are arranged such that they mesh in one another.

17. Method for capacitively detecting a presence of an input means (3) in the region of a detection area (4) of a sensor surface (5) with a first electrically conductive sensor electrode (6), wherein an evaluation unit (8) measures the capacitance of the first sensor electrode (6) with respect to earth (12) at the first connection (10) via a first connection line (9),
**characterized in that**
the evaluation device (8) carries out at least one measurement via a second connection line (13) with an associated second connection (14) of the first sensor electrode (6) in order to increase the measurement accuracy and/or fault detection, and wherein the evaluation unit (8) carries out a continuity test between the first connections (10, 11) and second connections (14, 15) of the respective sensor electrode.

18. Method for capacitively detecting a presence of an input means (3) in the region of a detection area (4) of a sensor surface (5) according to Claim 17, **characterized in that**
the evaluation unit (8) carries out measurements on a second electrically conductive sensor electrode (7) in the region of a detection area (4) at a first and/or second associated connection (11, 15) via a third or fourth connection line (28).

19. Method for capacitively detecting a presence of an input means (3) in the region of a detection area (4) of a sensor surface (5) according to one of Claims 17 to 18, **characterized in that**
the evaluation unit (8) measures a voltage drop at both connections of the respective sensor electrode (6, 7).

20. Method for capacitively detecting a presence of an input means (3) in the region of a detection area (4) of a sensor surface (5) according to either of Claims 17 and 18,
**characterized in that**
the evaluation unit (8) carries out a resistance measurement between the first connections (10, 11) and second connections (14, 15) of the respective sensor electrode (6, 7) .

21. Method for capacitively detecting a presence of an input means (3) in the region of a detection area (4) of a sensor surface (5) according to one of Claims 17 to 20, **characterized in that**
the evaluation unit (8) respectively measures the capacitance with respect to earth (12) at the first connection (10, 11) and at the second connection (14, 15) of a sensor electrode (6, 7).

22. Method for capacitively detecting a presence of an input means (3) in the region of a detection area (4) of a sensor surface (5) according to one of Claims 17 to 20, **characterized in that**
the evaluation unit (8) interconnects the first connections (10, 11) and second connections (14, 15) of the respective first sensor electrode (6) and/or second sensor electrode (7) and measures the capacitance of the first sensor electrode (6) and/or second sensor electrode (7) with respect to earth (12) via the respective connections.

23. Method for capacitively detecting a presence of an input means (3) in the region of a detection area (4) of a sensor surface (5) according to one of Claims 18 to 20, **characterized in that**
the evaluation unit (8) respectively interconnects the first connections (10, 11) and second connections (14, 15) of the first sensor electrode (6) and second sensor electrode (7) and measures the capacitance between the first sensor electrode (6) and the second sensor electrode (7) via the respective connections.

24. Method for capacitively detecting a presence of an input means (3) in the region of a detection area (4) of a sensor surface (5) according to one of Claims 18 to 20, **characterized in that**
the evaluation unit (8) carries out a capacitance measurement between the first sensor electrode (6) and the second sensor electrode (7) via a first connection (10) or a second connection (14) of the first sensor electrode (6) and a first connection (11) or a second connection (15) of the second sensor electrode (7).

25. Method for capacitively detecting a presence of an input means (3) in the region of a detection area (4) of a sensor surface (5) according to one of Claims 18 to 20, **characterized in that**
the evaluation unit (8) interconnects the first connection (10, 11) and the second connection (14, 15) of a first sensor electrode (6) or a second sensor electrode (7) and carries out a capacitance measurement between the interconnected connections of the first sensor electrode (6) or the second sensor electrode (7) and the first connections (10, 11) or second connections (14, 15) of the respective other sensor electrode (6, 7).

26. Method for capacitively detecting a presence of an input means (3) in the region of a detection area (4) of a sensor surface (5) according to one of Claims 21 to 25, **characterized in that**
the evaluation unit (8) carries out a first capacitance measurement according to one of the above-mentioned methods using a first connection configuration and then carries out at least a second capacitance measurement according to one of the above-mentioned methods using a second connection configuration, wherein the evaluation unit (8) compares the measured values from the first and at least second capacitance measurements with one another and/or with a target value.

27. Method for capacitively detecting a presence of an input means (3) in the region of a detection area (4) of a sensor surface (5) according to one of Claims 21 to 26, **characterized in that**
the evaluation unit (8) applies signals or voltage levels to the first connections (10, 11) and/or second connections (14, 15) of the first sensor electrode (6) and/or second sensor electrode (7) for the purpose of the capacitance measurement and likewise used them to test the continuity and/or to measure the resistance of the first sensor electrode (6) and/or second sensor electrode (7) .

28. Method for capacitively detecting a presence of an input means (3) in the region of a detection area (4) of a sensor surface (5) according to one of Claims 21 to 27, **characterized in that**
the evaluation unit (8) carries out out the capacitance measurement and/or continuity test and/or resistance measurement in a parallel manner.

29. Method for capacitively detecting a presence of an input means (3) in the region of a detection area (4) of a sensor surface (5) according to one of Claims 21 to 28, **characterized in that**
the evaluation unit (8) carries out the capacitance measurement according to the capacitive voltage divider method.

## Revendications

1. Dispositif capteur (1) pour un véhicule, en particulier un dispositif de commande (2) pour commander des fonctions de sécurité, destiné à détecter de manière capacitive la présence d'un moyen d'entrée (3) dans la zone d'une surface de détection (4) d'une surface de capteur (5) avec une première électrode de capteur (6) électriquement conductrice qui est disposée dans la zone de la surface de détection (4), et comprenant une unité d'évaluation (8) qui est reliée électriquement par l'intermédiaire d'une première ligne de connexion (9) à une borne (10) associée de la première électrode de capteur (6) et est conçue pour mesurer la capacité par rapport à la masse (12) à la borne (10) de la première électrode de capteur (6),
**caractérisé en ce que**
le dispositif d'évaluation (8) est relié électriquement par l'intermédiaire d'une deuxième ligne de connexion (13) à une deuxième borne (14) associée de la première électrode de capteur (6), dans lequel la première (10) et la deuxième (14) borne sont disposées dans des zones d'extrémité mutuellement opposées de la première électrode de capteur (6), et dans lequel l'unité d'évaluation (8) est conçue pour effectuer au niveau du dispositif capteur (1) un contrôle de passage entre la première (10, 11) et la deuxième borne (14, 15) de l'électrode de capteur (6, 7).

2. Dispositif capteur (1) pour un véhicule selon la revendication 1,
**caractérisé en ce que**
dans la zone de la surface de détection (4) est disposée une deuxième électrode de capteur (7) électriquement conductrice avec une première borne (11) associée qui est reliée à l'unité d'évaluation (8) par l'intermédiaire d'une troisième ligne de connexion (28).

3. Dispositif capteur (1) pour un véhicule selon la revendication 2,
**caractérisé en ce que**
la deuxième électrode de capteur (7) électriquement conductrice dispose d'une deuxième borne (15) associée qui est reliée à l'unité d'évaluation (8) par l'intermédiaire d'une quatrième ligne de connexion (29), la première (11) et la deuxième (15) borne étant disposées dans des zones d'extrémité mutuellement opposées de la deuxième électrode de capteur (6).

4. Dispositif capteur (1) pour un véhicule selon l'une quelconque des revendications 1 à 3,
**caractérisé en ce que**
l'unité d'évaluation (8) est conçue pour mesurer une chute de tension entre la première (10, 11) et la deuxième (14, 15) borne de l'électrode de capteur (6, 7).

5. Dispositif capteur (1) pour un véhicule selon l'une quelconque des revendications 1 à 3,
**caractérisé en ce que**
l'unité d'évaluation (8) est conçue pour effectuer une mesure de résistance au niveau du dispositif capteur (1) entre la première (10, 11) et la deuxième (14, 15) borne de l'électrode de capteur.

6. Dispositif capteur (1) pour un véhicule selon l'une quelconque des revendications 1 à 5,
**caractérisé en ce que**
l'unité d'évaluation (8) est conçue pour détecter un défaut au niveau du dispositif capteur (1) en comparant les valeurs de mesure avec au moins une valeur de référence.

7. Dispositif capteur (1) pour un véhicule selon l'une quelconque des revendications précédentes,
**caractérisé en ce que**
l'unité d'évaluation (8) est conçue pour mesurer la capacité par rapport à la masse (12) au niveau de la première (10, 11) et de la deuxième (14, 15) borne de la première (6) et/ou de la deuxième (7) électrode de capteur.

8. Dispositif capteur (1) pour un véhicule selon l'une quelconque des revendications précédentes,
**caractérisé en ce que**
l'unité d'évaluation (8) est conçue pour interconnecter respectivement les premières (10, 11) et les deuxièmes (14, 15) bornes de la première (6) et/ou de la deuxième électrode de capteur (7) et pour mesurer la capacité de la première (6) et/ou de la deuxième électrode de capteur (7) par rapport à la masse (12) par l'intermédiaire des bornes respectives.

9. Dispositif capteur (1) pour un véhicule selon l'une quelconque des revendications 3 à 8,
**caractérisé en ce que**
l'unité d'évaluation (8) est conçue pour interconnecter respectivement les premières (10, 11) et les deuxièmes (14, 15) bornes de la première (6) et de la deuxième électrode de capteur (7) et pour mesurer la capacité entre la première (6) et la deuxième électrode de capteur (7) par l'intermédiaire des bornes respectives.

10. Dispositif capteur (1) pour un véhicule selon l'une quelconque des revendications 2 à 9,
**caractérisé en ce que**
l'unité d'évaluation (8) est conçue pour effectuer une mesure de capacité entre une première (10) ou une deuxième borne (11) de la première électrode de capteur (6) et une première (14) ou une deuxième borne (15) de la deuxième électrode de capteur (7).

11. Dispositif capteur (1) pour un véhicule selon l'une quelconque des revendications 2 à 10,
**caractérisé en ce que**
l'unité d'évaluation (8) est conçue pour interconnecter la première (10, 11) et la deuxième borne (14, 15) d'une première (6) ou d'une deuxième (7) électrode de capteur et pour effectuer une mesure de capacité entre les bornes interconnectées de la première (6) ou de la deuxième électrode de capteur (7) et les premières (10, 11) ou les deuxièmes (14, 15) bornes de l'autre électrode de capteur respectivement.

12. Dispositif capteur (1) pour un véhicule selon l'une quelconque des revendications 7 à 11,
**caractérisé en ce que**
l'unité d'évaluation (8) est conçue pour effectuer une première mesure de capacité selon l'un des procédés précédents avec une première configuration de bornes et pour effectuer ensuite au moins une deuxième mesure de capacité selon l'un des procédés précédents avec une deuxième configuration de bornes, dans lequel l'unité d'évaluation (8) est en outre conçue pour comparer les valeurs de mesure de la première et de ladite au moins deuxième mesure de capacité l'une avec l'autre et/ou avec une valeur de consigne.

13. Dispositif capteur (1) pour un véhicule selon l'une quelconque des revendications 7 à 12,
**caractérisé en ce que**
l'unité d'évaluation (8) est conçue pour utiliser les signaux ou niveaux de tension appliqués pour la mesure de capacité aux premières (10, 11) et/ou deuxièmes bornes (14, 15) de la première (6) et/ou de la deuxième électrode de capteur (7) pour un contrôle de passage et/ou une mesure de résistance de la première (6) et/ou de la deuxième électrode de capteur (7).

14. Dispositif capteur (1) pour un véhicule selon l'une quelconque des revendications 6 à 13,
**caractérisé en ce que**
l'unité d'évaluation (8) est conçue pour effectuer en parallèle la mesure de capacité et/ou le contrôle de passage et/ou la mesure de résistance.

15. Dispositif capteur (1) pour un véhicule selon l'une quelconque des revendications précédentes,
**caractérisé en ce que**
les premières (6) et/ou les deuxièmes électrodes de capteur (7) sont réalisées sous la forme d'une structure métallique sur une carte de circuits imprimés (16).

16. Dispositif capteur (1) pour un véhicule selon l'une quelconque des revendications 2 à 15,
**caractérisé en ce que**
les premières (6) et les deuxièmes électrodes de capteur (7) sont réalisées sous la forme de pistes conductrices (17) planes en serpentin, et la première (6) et la deuxième électrode de capteur (7) sont disposées en s'engrenant l'une dans l'autre.

17. Procédé permettant de détecter de manière capacitive la présence d'un moyen d'entrée (3) dans la zone d'une surface de détection (4) d'une surface de capteur (5) avec une première électrode de capteur (6) électriquement conductrice, dans lequel une unité d'évaluation (8) mesure par l'intermédiaire d'une première ligne de connexion (9) la capacité de la première électrode de capteur (6) par rapport à la masse (12) au niveau de la première borne (10),
**caractérisé en ce que**
le dispositif d'évaluation (8) effectue par l'intermédiaire d'une deuxième ligne de connexion (13) avec une deuxième borne (14) associée de la première électrode de capteur (6) au moins une mesure pour augmenter la précision de mesure et/ou la détection de défaut, et dans lequel l'unité d'évaluation (8) effectue un contrôle de passage entre les premières (10, 11) et les deuxièmes (14, 15) bornes de l'électrode de capteur respectives.

18. Procédé permettant de détecter de manière capacitive la présence d'un moyen d'entrée (3) dans la zone d'une surface de détection (4) d'une surface de capteur (5) selon la revendication 17, **caractérisé en ce que** l'unité d'évaluation (8) effectue des mesures au niveau d'une deuxième électrode de capteur (7) électriquement conductrice dans la zone d'une surface de détection (4) au niveau d'une première et/ou d'une deuxième borne (11, 15) associée(s) par l'intermédiaire d'une troisième ou d'une quatrième ligne de connexion (28).

19. Procédé permettant de détecter de manière capacitive la présence d'un moyen d'entrée (3) dans la zone d'une surface de détection (4) d'une surface de capteur (5) selon l'une quelconque des revendications 17 à 18, **caractérisé en ce que**
l'unité d'évaluation (8) mesure une chute de tension aux deux bornes de l'électrode de capteur (6, 7) respective.

20. Procédé permettant de détecter de manière capacitive la présence d'un moyen d'entrée (3) dans la zone d'une surface de détection (4) d'une surface de capteur (5) selon l'une quelconque des revendications 17 ou 18, **caractérisé en ce que**
l'unité d'évaluation (8) effectue une mesure de résistance entre les premières (10, 11) et les deuxièmes (14, 15) bornes de l'électrode de capteur (6, 7) respective.

21. Procédé permettant de détecter de manière capacitive la présence d'un moyen d'entrée (3) dans la zone d'une surface de détection (4) d'une surface de capteur (5) selon l'une quelconque des revendications 17 à 20, **caractérisé en ce que**
l'unité d'évaluation (8) mesure respectivement la capacité par rapport à la masse (12) au niveau de la première (10, 11) et de la deuxième borne (14, 15) d'une électrode de capteur (6, 7).

22. Procédé permettant de détecter de manière capacitive la présence d'un moyen d'entrée (3) dans la zone d'une surface de détection (4) d'une surface de capteur (5) selon l'une quelconque des revendications 17 à 20, **caractérisé en ce que**
l'unité d'évaluation (8) interconnecte les premières (10, 11) et les deuxièmes bornes (14, 15) de la première (6) et/ou de la deuxième électrode de capteur (7) respective et mesure la capacité de la première (6) et/ou de la deuxième électrode de capteur (7) par rapport à la masse (12) par l'intermédiaire des bornes respectives.

23. Procédé permettant de détecter de manière capacitive la présence d'un moyen d'entrée (3) dans la zone d'une surface de détection (4) d'une surface de capteur (5) selon l'une quelconque des revendications 18 à 20, **caractérisé en ce que**
l'unité d'évaluation (8) interconnecte respectivement les premières (10, 11) et les deuxièmes (14, 15) bornes de la première (6) et de la deuxième électrode de capteur (7) et mesure la capacité entre la première (6) et la deuxième électrode de capteur (7) par l'intermédiaire des bornes respectives.

24. Procédé permettant de détecter de manière capacitive la présence d'un moyen d'entrée (3) dans la zone d'une surface de détection (4) d'une surface de capteur (5) selon l'une quelconque des revendications 18 à 20, **caractérisé en ce que**
l'unité d'évaluation (8) effectue une mesure de capacité entre la première (6) et la deuxième électrode de capteur (7) par l'intermédiaire d'une première (10) ou d'une deuxième (14) borne de la première électrode de capteur (6) et d'une première (11) ou d'une deuxième borne (15) de la deuxième électrode de capteur (7).

25. Procédé permettant de détecter de manière capacitive la présence d'un moyen d'entrée (3) dans la zone d'une surface de détection (4) d'une surface de capteur (5) selon l'une quelconque des revendications 18 à 20, **caractérisé en ce que**
l'unité d'évaluation (8) interconnecte la première (10, 11) et la deuxième borne (14, 15) d'une première (6) ou d'une deuxième (7) électrode de capteur et effectue une mesure de capacité entre les bornes interconnectées de la première (6) ou de la deuxième électrode de capteur (7) et les premières (10, 11) ou les deuxièmes (14, 15) bornes de l'autre électrode de capteur (6, 7) respectivement.

26. Procédé permettant de détecter de manière capacitive la présence d'un moyen d'entrée (3) dans la zone d'une surface de détection (4) d'une surface de capteur (5) selon l'une quelconque des revendications 21 à 25, **caractérisé en ce que**
l'unité d'évaluation (8) effectue une première mesure de capacité selon l'un des procédés précédents avec une première configuration de bornes et effectue ensuite au moins une deuxième mesure de capacité selon l'un des procédés précédents avec une deuxième configuration de bornes, dans lequel l'unité d'évaluation (8) compare les valeurs de mesure de la première et de ladite au moins deuxième mesure de capacité l'une avec l'autre et/ou avec une valeur de consigne.

27. Procédé permettant de détecter de manière capacitive la présence d'un moyen d'entrée (3) dans la zone d'une surface de détection (4) d'une surface de capteur (5) selon l'une quelconque des revendications 21 à 26, **caractérisé en ce que**
l'unité d'évaluation (8) applique pour la mesure de capacité des signaux ou des niveaux de tension aux premières (10, 11) et/ou deuxièmes (14, 15) bornes de la première (6) et/ou de la deuxième électrode de capteur (7) et les utilise aussi pour un contrôle de passage et/ou une mesure de résistance de la première (6) et/ou de la deuxième(7) électrode de capteur.

28. Procédé permettant de détecter de manière capacitive la présence d'un moyen d'entrée (3) dans la zone d'une surface de détection (4) d'une surface de capteur (5) selon l'une quelconque des revendications 21 à 27, **caractérisé en ce que**
l'unité d'évaluation (8) effectue en parallèle la mesure de capacité et/ou le contrôle de passage et/ou la mesure de résistance.

29. Procédé permettant de détecter de manière capacitive la présence d'un moyen d'entrée (3) dans la zone d'une surface de détection (4) d'une surface de capteur (5) selon l'une quelconque des revendications 21 à 28, **caractérisé en ce que**
l'unité d'évaluation (8) effectue la mesure de capacité selon le procédé à diviseur de tension capacitif.
